# EUROPEAN PATENT APPLICATION

(11) **EP 4 576 899 A1**
(43) Date of publication of application: **25.06.2025**
(21) Application number: 23855070.1
(22) Date of filing: 27.07.2023
(51) Int. Cl.: H04W 72/04, H04W 74/08, H04L 5/00, H04W 84/12

(54) **METHOD AND DEVICE FOR PERFORMING IMPROVED SUBCHANNEL SELECTIVE TRANSMISSION OPERATION IN WIRELESS LAN SYSTEM**

(30) Priority: 19.08.2022 KR 20220104202
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Frenkel, Matthias Alexander
(86) International application number: PCT/KR2023/010959
(87) International publication number: WO 2024/039100

(57) **Abstract**

Disclosed are a method and device for transmission or reception on a channel with respect to a wide bandwidth in a wireless LAN system. The method performed by a first station (STA) in a wireless LAN system according to an embodiment of the present disclosure may include the steps of: generating a PPDU within a bandwidth belonging to a predefined frequency band; and transmitting the PPDU on a predetermined channel corresponding to a channel width smaller than the bandwidth. Here, the PPDU may include at least one field including allocation information for at least one resource unit (RU) on the predetermined channel, the predetermined channel may be configured by puncturing a channel having a specific size with respect to the bandwidth, and a location at which the channel having a specific size is punctured within the bandwidth may be based on whether the bandwidth belongs to a high frequency or a low frequency within the predefined frequency band.

## Description

### [Technical Field]

The present disclosure relates to a method and apparatus for performing enhanced subchannel selective transmission (SST) operation in a Wireless Local Area Network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more improved wireless communication environment, the improvement technology for Extremely High Throughput (EHT) is being discussed. For example, technologies for Multiple Input Multiple Output (MIMO) supporting increased bandwidth, efficient utilization of multiple bands and increased spatial streams and for adjusting multiple access points (APs) are being studied, and in particular, various technologies for supporting traffic with low latency or real-time characteristics are being studied. Furthermore, new technologies are being discussed to support ultra high reliability (UHR), including improvements or extensions to EHT technology.

### [Disclosure]

### [Technical Problem]

The technical object of the present disclosure is to provide a method and apparatus for performing an enhanced subchannel selective transmission (SST) operation in a Wireless Local Area Network (WLAN) system.

The technical object of the present disclosure is to provide a method and apparatus for supporting an SST operation in a wide bandwidth that may be supported in a WLAN system.

The technical object of the present disclosure is to provide a method and apparatus for configuring/indicating a specific channel on which a station (STA) assigned to a secondary channel may transmit and receive a control/management frame for an SST operation in a WLAN system.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless LAN system according to an aspect of the present disclosure may comprise: receiving, from a second STA, a frame including at least one field related to a channel for a subchannel selective transmission (SST) operation; and performing an SST operation on the channel based on the at least one field. Herein, the at least one field may include a first field including bitmap information related to activation of the channel and a second field indicating a resolution to be applied to the bitmap information, and the second field may be defined to indicate one of a plurality of predefined resolution candidates.

A method performed by a second station (STA) in a wireless LAN system according to an additional aspect of the present disclosure may comprise: constructing a frame including at least one field related to a channel for a subchannel selective transmission (SST) operation; and transmitting the frame including the at least one field to a first STA. Herein, the at least one field may include a first field including bitmap information related to activation of the channel and a second field indicating a resolution to be applied to the bitmap information, and the second field may be defined to indicate one of a plurality of predefined resolution candidates.

### [Advantageous Effects]

According to the present disclosure, a method and apparatus for performing an enhanced subchannel selective transmission (SST) operation in a Wireless Local Area Network (WLAN) system may be provided.

According to the present disclosure, a method and apparatus for supporting an SST operation in a wide bandwidth that may be supported in a WLAN system may be provided.

According to the present disclosure, a method and apparatus for configuring/indicating a specific channel on which a station (STA) assigned to a secondary channel may transmit and receive a control/management frame for an SST operation in a WLAN system may be provided.

According to the present disclosure, efficient physical layer protocol data unit (PPDU) transmission and reception may be performed in a secondary channel in a WLAN system, and throughput and efficiency may be improved based on this.

Effects achievable by the present disclosure are not limited to the above-described effects, and other effects which are not described herein may be clearly understood by those skilled in the pertinent art from the following description.

### [Description of Drawings]

The accompanying drawings, which are included as part of the detailed description to aid understanding of the present disclosure, provide embodiments of the present disclosure and together with the detailed description describe technical features of the present disclosure.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for explaining a link setup process to which the present disclosure may be applied.
FIG. 4 is a diagram for explaining a backoff process to which the present disclosure may be applied.
FIG. 5 is a diagram for explaining a frame transmission operation based on CSMA/CA to which the present disclosure may be applied.
FIG. 6 is a diagram for explaining an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an example of a subchannel selective transmission (SST) operation element format to which the present disclosure may be applied.
FIG. 9 is a diagram for explaining the operation of a first STA in an SST operation according to the present disclosure.
FIG. 10 is a diagram for explaining the operation of a second STA in an SST operation according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

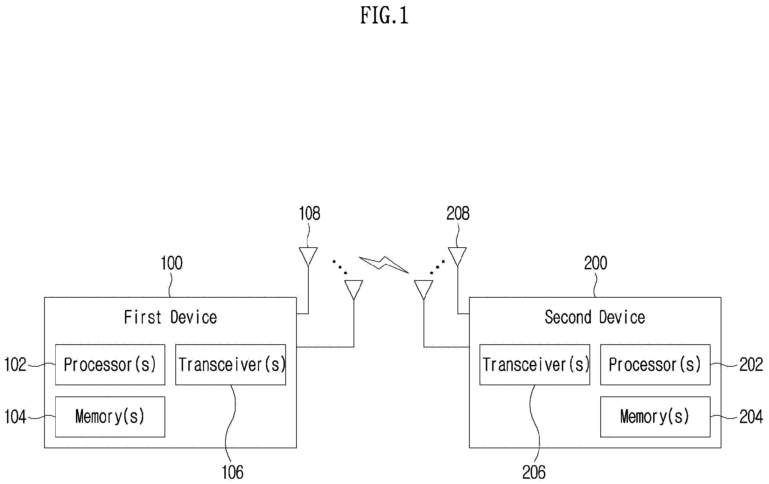

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

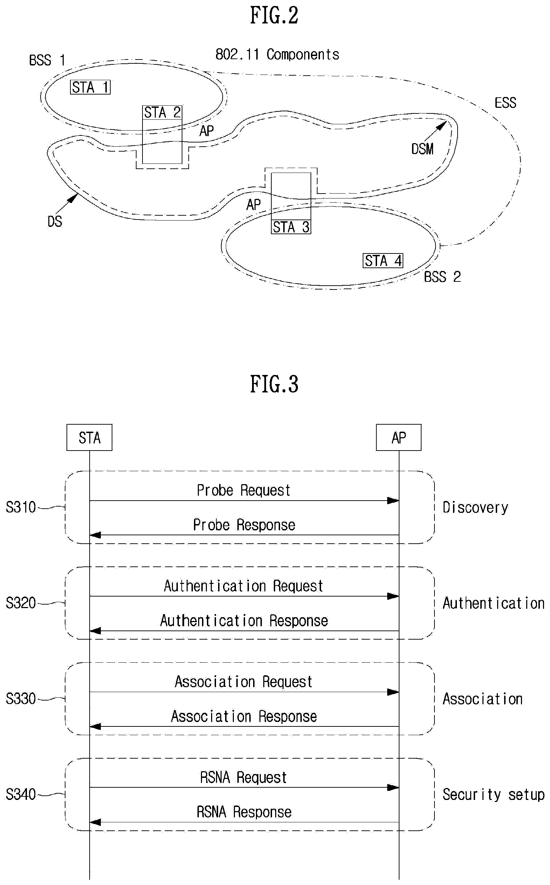

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

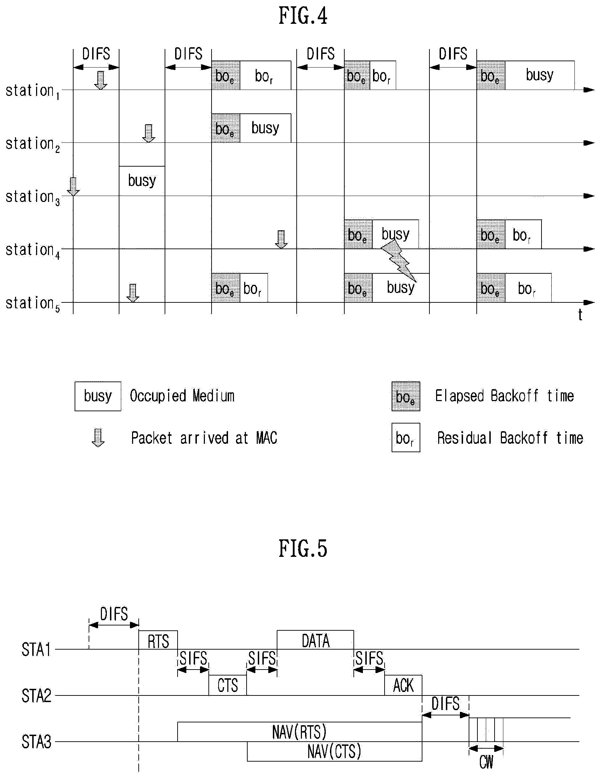

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a pollingbased synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the backoff count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

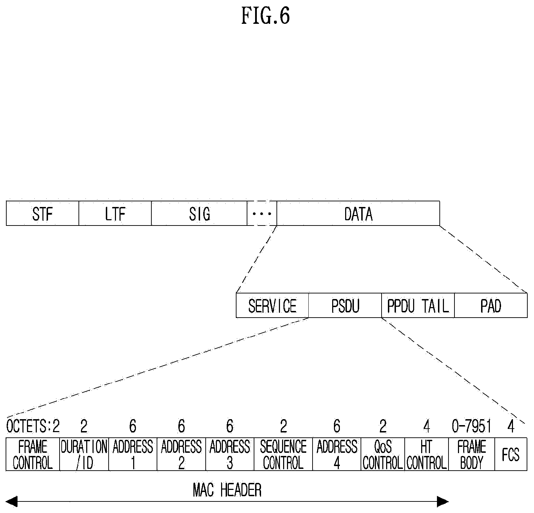

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

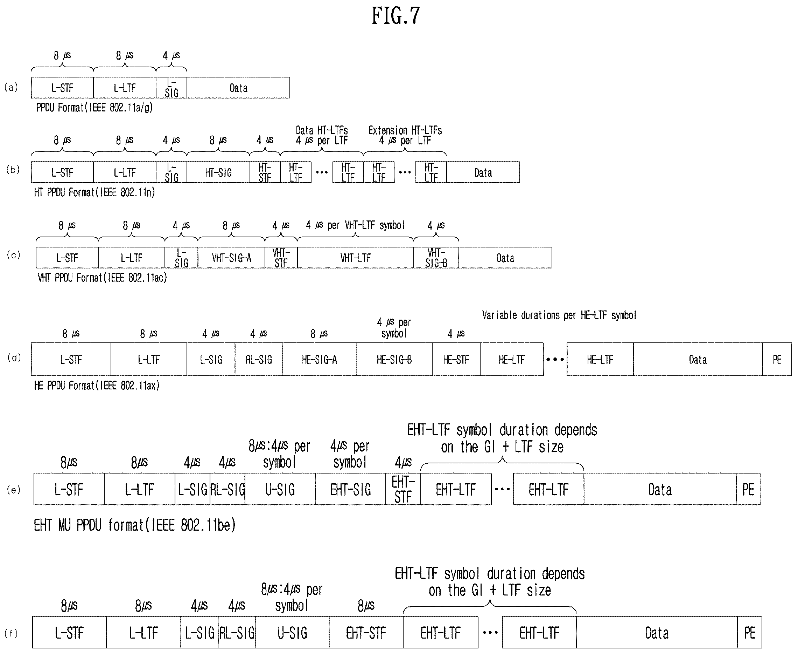

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Subchannel selective transmission operation

SST may include dynamically changing the primary channel within the overall bandwidth. For example, SST operation may include operating under the assumption that only a portion of the overall bandwidth is the entire bandwidth.

STAs and APs having the capability to support SST operation may set up SST operation by negotiating a trigger-enabled target wake time (TWT).

Here, the TWT request may include a TWT channel field with at most one bit set to 1, which may indicate a secondary channel for which the request includes an RU allocation addressed to a 20 MHz operating STA.

A TWT request may include a TWT channel field with all four LSBs or all four MSBs set to 1, which may indicate whether the primary 80 MHz channel or the secondary 80 MHz channel is requested to include an RU allocation addressed to an 80 MHz operating STA.

The TWT response may include a TWT Channel field with at most one bit set to 1, which may indicate a secondary channel that will contain the RU allocation addressed to the 20 MHz operating STA. The TWT response may include a TWT Channel field with all four LSBs or all four MSBs set to 1, which may indicate whether the primary 80 MHz channel or the secondary 80 MHz channel may contain the RU allocation addressed to the 80 MHz operating STA.

STAs and APs that have successfully set up SST operation may operate according to the following rules.

If the AP changes its operating channel or channel width and the secondary channel of the trigger-enabled TWT does not exist within the new operating channel or channel width, the AP and STA implicitly terminate the trigger-enabled TWT.

An AP may follow an individual TWT agreement for frame exchange with an STA during trigger-enabled TWT service periods (SPs). Here, the AP may ensure that the individually addressed RUs allocated in the DL MU PPUD and trigger frame reside within a subchannel indicated in the TWT channel field of the TWT response and follow RU restriction rules. The same subchannel may be used for the same STA and all trigger-enabled TWT SPs that overlap in time.

An STA operating on a secondary channel may not perform an operation mode indication (OMI) operation or an operation mode notification (OMN) operation for changing the operating bandwidth.

An STA may follow an individual TWT agreement for frame exchange with an AP during trigger-enabled TWT SPs. Here, the STA may be available on a subchannel indicated in the TWT channel field of the TWT response at the TWT start time. An STA may not access the medium on a subchannel using DCF or EDCA function (EDCAF). An STA may not respond to a trigger frame addressed to it unless it detects a frame for which it may set a NAV by performing CCA. An STA may update a NAV if it receives a PPDU on a subchannel.

An STA may include a channel switch timing element in a (re-)association request frame transmitted to an AP to indicate the time required for the STA to switch between different subchannels. The received channel switch time may inform the AP of a time period during which the STA may not be able to receive frames before a TWT start time and after a trigger-enabled TWT SP.

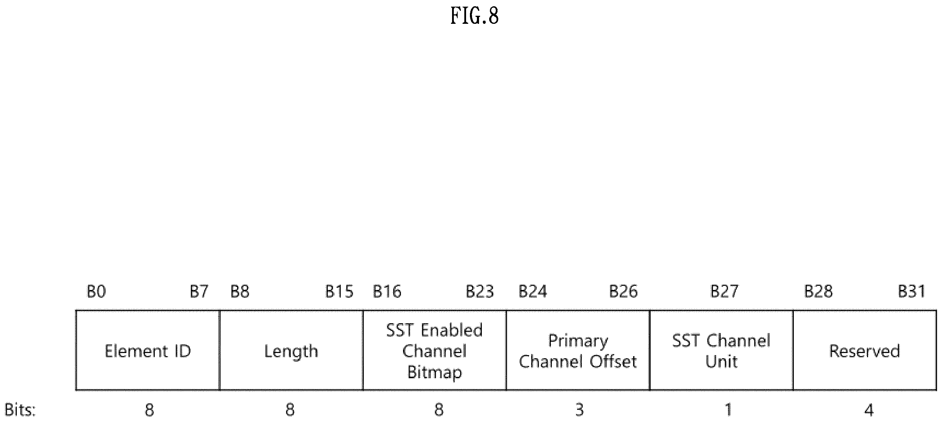

FIG. 8 is a diagram illustrating an example of a subchannel selective transmission (SST) operation element format to which the present disclosure may be applied.

The SST operation element format in an existing wireless LAN system may include an 8-bit Element ID field, an 8-bit Length field, an 8-bit SST Enabled Channel Bitmap field, a 3-bit Primary Channel Offset field, a 1-bit SST Channel Unit field, and a 4-bit reserved bit.

The element ID field is used to identify an element of the corresponding format, and the length field may indicate the number of octets of the element excluding the element ID field and the length field.

The SST Activation Channel Bitmap field may include a bitmap indicating the channels that are activated for SST operation. Each bit of the bitmap corresponds to one channel of the same width as the value of the SST Channel Unit field, and the least significant bit (LSB) may correspond to the lowest numbered subchannel in the SST Activation Channel Bitmap field.

The channel number of each channel in the SST Activation Channel Bitmap field may be equal to PCN minus (-) OPC plus (+) POS, where PCN is the value of the Primary Channel Number subfield of the most recently transmitted S1G operational element. OPC is the offset of the primary channel relative to the lowest numbered subchannel in the bitmap specified by the value of the Primary Channel Offset field. POS is the position of the channel in the bitmap.

Setting a bit position in the bitmap to 1 may indicate that the subchannel is enabled for SST operation, but transmissions from an SST STA on that subchannel are permitted according to the rules defined in the specification. One or more bits in the bitmap may be equal to 1.

The Primary Channel Offset field may indicate the relative position of the primary channel with respect to the lowest numbered channel in the SST Activation Channel Bitmap field. For example, setting the Primary Channel Offset field to 2 may indicate that the primary channel is the third subchannel in the SST Activation Channel Bitmap.

The SST channel unit field may indicate the channel width unit of each SST channel. Setting the field to 1 may indicate that the channel width unit is 1 MHz, and setting the field to 2 may indicate that the channel width unit is 2 MHz.

### Enhanced SST operation

Hereinafter, the present disclosure proposes a method for defining an enhanced SST operation and related SST operation elements for improving throughput and efficiency in a next-generation wireless LAN system.

In the case of the SST operation and SST operation elements in the existing wireless LAN system described above, there is no specific channel for the primary channel use through which STA(s) assigned to the secondary channel may transmit and receive control frames and/or management frames. Accordingly, a method configuring/indicating for the specific channel is also not defined.

Here, the specific channel may mean a channel that plays a similar role to the primary 20MHz channel, i.e., P20, within the secondary channel.

In the following disclosure, for the sake of clarity of explanation, the specific channel is referred to as a primary-like channel. In this regard, the proposed method in the present disclosure is not restricted by the name, and it is not excluded that the specific channel may be applied by replacing it with another name. Additionally, the primary-like channel in the present disclosure is described assuming that it is set in units of 20 MHz, but it is not excluded that it may be set in units of other channel widths.

Additionally, for the SST operation and SST operation elements in the existing wireless LAN system described above, a channel for the SST operation may be allocated only within the primary 160MHz channel, i.e., P160, and allocation within the secondary 160MHz channel, i.e., S160, in a 320MHz bandwidth is not possible. Additionally, channel allocation for the SST operation in a wide bandwidth (e.g., 480MHz bandwidth, 640MHz bandwidth, etc.) that may be supported in the next-generation wireless LAN system is not considered.

Taking these points into consideration, the present disclosure proposes a method for allocating a channel for SST operation considering a wide bandwidth and a method for configuring a primary-like channel for efficient management of SST operation through various examples.

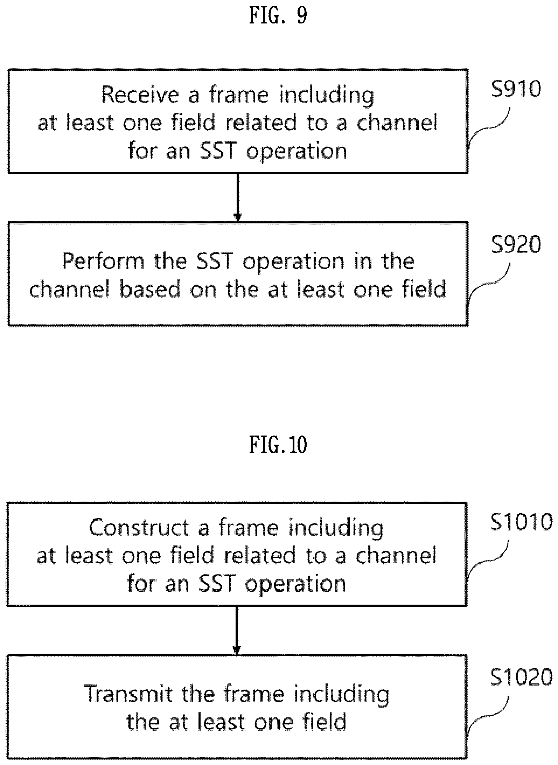

FIG. 9 is a drawing for explaining the operation of the first STA in the SST operation according to the present disclosure.

In step S910, the first STA may receive a frame including at least one field related to a channel for SST operation from the second STA.

Here, at least one field may include a first field (e.g., SST activation channel bitmap field) including bitmap information related to activation of the corresponding channel and a second field (e.g., resolution field) indicating a resolution to be applied to the corresponding bitmap information.

At this time, the second field may be defined to indicate one of a plurality of predefined resolution candidates. For example, the plurality of resolution candidates may be defined to include at least two of a 20 MHz resolution, a 40 MHz resolution, or an 80 MHz resolution.

For example, if the maximum bandwidth associated with the SST operation corresponds to a 320 MHz bandwidth, the second field may be composed of 1 bit. In this case, the first value (e.g., a value of 0) according to the 1 bit may be defined to indicate a 20 MHz resolution, and the second value (e.g., a value of 1) may be defined to indicate a 40 MHz resolution.

For example, if the maximum bandwidth associated with the SST operation is 480 MHz bandwidth or 640 MHz bandwidth, the second field may consist of 2 bits. In this case, the first value according to the 2 bits (e.g., value 0 corresponding to '00') may indicate 20 MHz resolution, the second value (e.g., value 1 corresponding to '01') may indicate 40 MHz resolution, the third value (e.g., value 2 corresponding to '10') may indicate 80 MHz resolution, and the fourth value (e.g., value 3 corresponding to '11') may be defined as a reserved value.

In this regard, the number of bits in the first field may be variably set based on the size of the maximum bandwidth associated with the aforementioned SST operation.

In step S920, the first STA may perform an SST operation on the corresponding channel based on at least one field included in the frame.

For example, the step of performing the SST operation may include the step of performing transmission and reception of a control frame or a management frame on a specific 20 MHz channel within a secondary channel to which the first STA is assigned.

That is, the specific 20MHz channel may correspond to a primary 20MHz channel, i.e., a primary-like channel that performs a function similar to P20. The specific 20MHz channel may be configured within a secondary channel of a channel unit greater than or equal to 80MHz.

In this regard, the specific 20MHz channel may correspond to a 20MHz channel within a secondary channel located at a point corresponding to the location of P20 of the BSS to which the first STA belongs. That is, the specific 20MHz channel may be implicitly indicated. Here, the location of P20, the location of the primary channel including P20, and/or the location of the secondary channel may be identified through a beacon received by the first STA.

If the 20MHz channel is punctured, the specific 20MHz channel mentioned above may correspond to a secondary 20MHz channel of the BSS to which the first STA belongs, i.e., a 20MHz channel within the secondary channel located at a point corresponding to the position of S20.

Additionally, when a 20MHz channel within the secondary channel is punctured, the above-mentioned specific 20MHz channel may be configured to one of the two 20MHz channels corresponding to the position of the secondary 40MHz channel, i.e., S40, according to a predefined rule.

For example, the two 20 MHz channels may include a) a first 20 MHz channel corresponding to a position of a primary 20 MHz channel within a primary 40 MHz channel, and b) a second 20 MHz channel corresponding to a position of a secondary 20 MHz channel within the primary 40 MHz channel.

Additionally, when the two 20MHz channels are punctured, the above-mentioned specific 20MHz channel may be configured to one of the four 20MHz channels corresponding to the position of the secondary 80MHz channel, i.e., S80, according to a predefined rule.

For example, the four 20 MHz channels may include: a) a first 20 MHz channel corresponding to a position of a primary 20 MHz channel within a primary 80 MHz channel, b) a second 20 MHz channel corresponding to a position of a secondary 20 MHz channel within a primary 80 MHz channel, c) a third 20 MHz channel corresponding to a position of a primary 20 MHz channel within a primary 40 MHz channel among two 20 MHz channels corresponding to a position of a secondary 40 MHz channel within a primary 80 MHz channel, and d) a fourth 20 MHz channel corresponding to a position of a secondary 20 MHz channel within a primary 40 MHz channel among two 20 MHz channels corresponding to a position of a secondary 40 MHz channel within a primary 80 MHz channel.

Additionally, based on the puncturing of the four 20MHz channels, the above-mentioned specific 20MHz channel may be configured to one of the eight 20MHz channels corresponding to the position of the secondary 160MHz channel, i.e., S160, according to a predefined rule.

For example, the eight 20MHz channels may include: a) a first 20MHz channel corresponding to the position of the primary 20MHz channel within the primary 160MHz channel, b) a second 20MHz channel corresponding to the position of the secondary 20MHz channel within the primary 160MHz channel, c) a third 20MHz channel corresponding to the position of the primary 20MHz channel within the primary 40MHz channel among two 20MHz channels corresponding to the position of the secondary 40MHz channel within the primary 160MHz channel, d) a fourth 20MHz channel corresponding to the position of a secondary 20MHz channel within a primary 40MHz channel among two 20MHz channels corresponding to the position of a secondary 40MHz channel within a primary 160MHz channel, e) a fifth 20MHz channel corresponding to the position of a primary 20MHz channel within a primary 80MHz channel among four 20MHz channels corresponding to the position of a secondary 80MHz channel within a primary 160MHz channel, f) a sixth 20MHz channel corresponding to the position of a secondary 20MHz channel within a primary 80MHz channel among four 20MHz channels corresponding to the position of a secondary 80MHz channel within a primary 160MHz channel, g) a seven 20MHz channel corresponding to the position of a primary 20MHz channel within a primary 40MHz channel among two 20MHz channels corresponding to the position of a secondary 40MHz channel within a primary 80MHz channel, among four 20MHz channels corresponding to the position of a secondary 80MHz channel within a primary 160MHz channel, and h) an eighth 20MHz channel corresponding to the position of a secondary 20MHz channel within a primary 40MHz channel among two 20MHz channels corresponding to the position of a secondary 40MHz channel within a primary 80MHz channel, among four 20MHz channels corresponding to the position of a secondary 80MHz channel within a primary 160MHz channel.

Additionally or alternatively, at least one field in the above-described step S910 may include a third field indicating a specific 20MHz channel within the secondary channel to which the first STA is assigned. That is, the specific 20MHz channel may be explicitly indicated.

The method performed by the first STA described in the example of FIG. 9 may be performed by the first device (100) of FIG. 1. For example, one or more processors (102) of the first device (100) of FIG. 1 may receive a frame including at least one field related to a channel for an SST operation from a second STA (200) through one or more transceivers (106), and may be configured to perform an SST operation on the corresponding channel based on the at least one field.

For example, one or more processors (102) of the first device (100) may decode at least one field included in a received frame. That is, the one or more processors (102) may be configured to decode one or more fields included in an SST operation element format to determine a channel on which an SST operation is to be performed.

As a specific example, one or more processors (102) may identify a location of a channel for an SST operation by decoding a first field (e.g., an SST activation channel bitmap field) including bandwidth-related information included in the corresponding frame, bitmap information related to channel activation, and a second field related to resolution for the corresponding bitmap information. Additionally, one or more processors (102) may be configured to identify a location of a primary-like channel for transmitting and receiving a control/management frame on a secondary channel to which the first device is assigned. To this end, one or more processors (102) may be configured to decode explicit indication information included in the corresponding frame, or identify a location of a primary-like channel implicitly indicated based on a predefined rule. One or more processors (102) may be configured to control an SST operation on a channel identified based on the aforementioned method.

Furthermore, one or more memories (104) of the first device (100) may store commands for performing the method described in the example of FIG. 9 or the examples described below when executed by one or more processors (102).

FIG. 10 is a drawing for explaining the operation of the second STA in the SST operation according to the present disclosure.

In step S1010, the second STA may construct a frame including at least one field related to a channel for SST operation.

Here, at least one field may include a first field (e.g., SST activation channel bitmap field) including bitmap information related to activation of the corresponding channel and a second field (e.g., resolution field) indicating a resolution to be applied to the corresponding bitmap information.

At this time, the second field may be defined to indicate one of a number of predefined resolution candidates.

In step S1020, the second STA may transmit a frame including at least one field to the first STA.

In the example of Fig. 10, at least one field (e.g., a first field, a second field, a third field, etc.) related to the SST operation, specific details for a specific 20MHz channel (e.g., a primary-like channel), etc. are the same as those described in the example of Fig. 9, and therefore, redundant descriptions are omitted.

The method performed by the second STA described in the example of FIG. 10 may be performed by the second device (200) of FIG. 1. For example, one or more processors (202) of the second device (200) of FIG. 1 may be configured to configure a frame including at least one field related to a channel for an SST operation, and transmit the frame including the at least one field to the first STA (100) via one or more transceivers (206).

For example, one or more processors (202) of the second device (200) may decode the frame by encoding at least one field related to a channel for an SST operation. That is, the one or more processors (202) may be configured to encode one or more fields for an SST operation element format to construct a frame for indicating/configuring an SST operation.

As a specific example, one or more processors (202) may encode a first field (e.g., SST activation channel bitmap field) including bandwidth-related information, bitmap information related to channel activation, and a second field related to resolution for the bitmap information, in order to configure/indicate a location of a channel for an SST operation. Additionally, one or more processors (202) may configure a location of a primary-like channel for transmitting and receiving a control/management frame on a secondary channel to which the first device is assigned. Alternatively, the location of the primary-like channel may be defined/configured in advance by regulation. One or more processors (202) may be configured to configure/indicate an SST operation in the first STA (100) based on the aforementioned method.

Furthermore, one or more memories (204) of the second device (200) may store instructions for performing the method described in the example of FIG. 10 or the examples described below when executed by one or more processors (202).

The SST operation element format described in the examples of FIGS. 9 and 10 may correspond to an extended/modified SST operation element format that includes one or more additional, modified, or excluded fields compared to the SST operation element format of FIG. 8.

The examples of FIGS. 9 and 10 may correspond to some of the various examples of the present disclosure. Hereinafter, various examples of the present disclosure, including the examples of FIGS. 9 and 10, will be described.

First, a specific method for allocating channels for SST operation considering a wide bandwidth is described.

For example, a method may be considered to define a new SST operation element (e.g., an enhanced SST operation element) using a new element ID. The new SST operation element may consist of fields similar to existing SST operation elements (e.g., the SST operation element format of FIG. 8).

In this regard, the number of bits of the SST activation channel bitmap field may be determined according to the maximum bandwidth to be defined in the next-generation wireless LAN system (e.g., UHR, etc.). For example, when the maximum bandwidth is 320 MHz / 480 MHz / 640 MHz, the number of bits of the SST activation channel bitmap field may be 16 / 24/32.

Alternatively, the number of bits of the SST activation channel bitmap field may be fixed, and a resolution field may be newly defined. The resolution field may be defined to indicate the resolution of the SST activation channel bitmap field. For example, the number of bits of the SST activation channel bitmap field may be fixed to 16 bits, and the resolution field may be configured/defined to 1 bit. In this case, a value of 0 in the resolution field may be defined to indicate a resolution of 20 MHz, and a value of 1 may be defined to indicate a resolution of 40 MHz.

As another example, a method of reusing existing SST operation elements (e.g., the SST operation element format of FIG. 8) may be considered.

The resolution in the existing SST activation channel bitmap field is limited to up to 20MHz. In contrast, the SST operation element proposed in the present disclosure may consider a method of defining and utilizing additional resolutions. For example, resolutions such as 40MHz/80MHz may be defined to be utilized.

Alternatively, a resolution field may be newly defined using an existing reserved field. The resolution field may indicate the resolution of the SST activation channel bitmap field. Here, the resolution field may be configured/defined as 1 bit or 2 bits. For example, 1 bit may be set/defined when the maximum bandwidth is defined up to a 320 MHz bandwidth, and 2 bits may be set/defined when the maximum bandwidth is defined up to a 480 MHz / 640 MHz bandwidth.

For example, if the resolution field is configured with 1 bit, a value of 0 may indicate 20 MHz resolution, a value of 1 may indicate 40 MHz resolution, etc. If the resolution field is configured with 2 bits, a value of 0 may indicate 20 MHz resolution, a value of 1 may indicate 40 MHz resolution, a value of 2 may indicate 80 MHz resolution, and a value of 3 may be reserved.

Next, a method for configuring a primary-like channel to manage efficient SST operation is described.

For example, an indication regarding the location of a primary-like channel may be performed by defining a specific field to indicate the location of that channel (e.g., a 20 MHz channel).

At this time, when reusing an existing SST operation element (e.g., the SST operation element format of FIG. 8), a field for indicating the location of a primary-like channel may be defined using a reserved field. Alternatively, when defining a new SST operation element (e.g., an enhanced SST operation element), the SST operation element may be defined to include a field for indicating the location of a primary-like channel.

For another example, to reduce the overhead of adding fields and to ease implementation, primary-like channels may be configured/defined to be implicitly indicated.

One or more of the following various examples may be considered to implicitly indicate a primary-like channel.

For example, the first or last 20MHz channel of a secondary channel to which an STA is assigned may be used as a primary-like channel.

If the channel is punctured, the first or last 20MHz channel that is not punctured may be used as a primary-like channel. At this time, puncturing-related information may be indicated through a beacon, etc.

As another example, a 20MHz channel located at a point corresponding to the position of P20, i.e., a primary 20MHz channel within a secondary channel, may be used as a primary-like channel.

That is, considering a primary channel of the same size as the allocated channel (i.e., the allocated secondary channel), a 20MHz channel located at a point corresponding to the location of P20 may be defined to be used as a primary-like channel. At this time, the STA may confirm/be indicated about the location of P20 of the BSS and the locations of all primary/secondary channels through a beacon, etc.

As a specific example, if an STA is assigned to a secondary 160MHz channel, i.e., S160, a primary 160MHz channel, i.e., a 20MHz channel within S160 located at a point corresponding to the P20 position within P160 may be used as a primary-like channel. As another specific example, if an STA is assigned to a primary 80MHz channel, i.e., a specific 80MHz channel other than P80, a 20MHz channel within the assigned 80MHz located at a point corresponding to the P20 position within P80 may be used as a primary-like channel.

In relation to the above example, if the 20MHz channel at that location is punctured, the following alternative approach may be applied.

For example, the 20MHz channel closest to the location may be used as the primary-like channel. In this case, if two 20MHz channels exist at the closest location, the 20MHz channel with the higher frequency or the 20MHz channel with the lower frequency may be used as the primary-like channel.

As another example, the nearest 20MHz channel in either the high or low direction may be used as the primary-like channel. In this case, if all 20MHz channels in the corresponding one direction are punctured, a cyclic shift may be applied so that the next non-punctured 20MHz channel may be used as the primary-like channel.

As another example, a secondary 20MHz channel, i.e. a 20MHz channel located at a point corresponding to the position of S20, may be used as a primary-like channel.

If the 20 MHz channel is punctured, among the two 20MHz channels located at a point corresponding to the position of the secondary 40MHz channel, that is S40, a 20MHz channel located at a point corresponding to the position of P20 within the primary 40MHz, that is P40, may be used as a primary-like channel. Additionally or alternatively, if the 20 MHz channel is punctured, the 20 MHz channel located at the point corresponding to the position of S20 within P40, among the two 20 MHz channels located at the point corresponding to the position of S40, may be used as a primary-like channel.

The S40-based method described above, the S80-based method and the S160-based method described below may not be applied when allocated to a specific channel of 40 MHz or less in size other than P40.

If the 20MHz channel is punctured, a 20MHz channel located at a point corresponding to the position of P20 within the primary 80MHz, that is P80, among the four 20MHz channels located at a point corresponding to the position of the secondary 80MHz channel, that is S80, may be used as a primary-like channel. Additionally or alternatively, if the 20MHz channel is punctured, a 20MHz channel located at a point corresponding to the position of S20 within the P80 may be used as a primary-like channel among the four 20MHz channels located at a point corresponding to the position of S80.

Additionally or alternatively, when the 20 MHz channel is punctured, among the two 20 MHz channels located at points corresponding to the positions of S40 within P80 among the four 20 MHz channels located at points corresponding to the positions of S80, a 20 MHz channel located at points corresponding to the positions of P20 within P40 may be used as a primary-like channel. Additionally or alternatively, when the 20 MHz channel is punctured, among the two 20 MHz channels located at points corresponding to the positions of S40 within P80 among the four 20 MHz channels located at points corresponding to the positions of S80, a 20 MHz channel located at points corresponding to the positions of S20 within P40 may be used as a primary-like channel.

The S80-based method described above and the S160-based method described below may not be applied when allocated to a specific 80 MHz or smaller channel other than P80.

If the 20 MHz channel is punctured, a 20 MHz channel located at a point corresponding to the position of P20 within the primary 160 MHz, that is P160, among the eight 20 MHz channels located at a point corresponding to the position of the secondary 160 MHz channel, that is S160, may be used as a primary-like channel. Additionally or alternatively, if the 20 MHz channel is punctured, among the eight 20 MHz channels located at a point corresponding to the position of S160, a 20 MHz channel located at a point corresponding to the position of S20 within P160 may be used as a primary-like channel.

Additionally or alternatively, when the 20 MHz channel is punctured, among the two 20 MHz channels located at points corresponding to the positions of S40 within P160 among the eight 20 MHz channels located at points corresponding to the positions of S160, a 20 MHz channel located at points corresponding to the positions of P20 within P40 may be used as a primary-like channel. Additionally or alternatively, when the 20 MHz channel is punctured, among the two 20 MHz channels located at points corresponding to the positions of S40 within P160 among the eight 20 MHz channels located at points corresponding to the positions of S160, a 20 MHz channel located at points corresponding to the positions of S20 within P40 may be used as a primary-like channel.

Additionally or alternatively, if the 20 MHz channel is punctured, among the four 20 MHz channels located at points corresponding to the positions of S80 within P160 among the eight 20 MHz channels located at points corresponding to the positions of S160, a 20 MHz channel located at points corresponding to the positions of P20 within P80 may be used as a primary-like channel. Additionally or alternatively, if the 20 MHz channel is punctured, among the four 20 MHz channels located at points corresponding to the positions of S80 within P160 among the eight 20 MHz channels located at points corresponding to the positions of S160, a 20 MHz channel located at points corresponding to the positions of S20 within P80 may be used as a primary-like channel. Additionally or alternatively, if the 20 MHz channel is punctured, among the eight 20 MHz located at the point corresponding to the position of S160, among the four 20 MHz located at the point corresponding to the position of S80 within P160, a 20 MHz channel located at the point corresponding to the position of P20 within P40, among the two 20 MHz located at the point corresponding to the position of P40 within P80, may be used as a primary-like channel. Additionally or alternatively, if the 20 MHz channel is punctured, among the eight 20 MHz located at the point corresponding to the position of S160, among the four 20 MHz located at the point corresponding to the position of S80 within P160, a 20 MHz channel located at the point corresponding to the position of P40 within P80, among the two 20 MHz located at the point corresponding to the position of S20 within P40, may be used as a primary-like channel.

The aforementioned S 160-based method may not be applicable when allocated to a specific 160MHz or smaller channel other than P160.

For the primary-like channel according to the proposed method of the present disclosure, one 20MHz channel within a specific channel may be configured as a primary-like channel. For example, one 20MHz channel within a 40MHz channel, an 80MHz channel, a 160MHz channel, and/or a 320MHz channel may be configured/indicated as a primary-like channel.

Alternatively, considering the complexity, the primary-like channel may be configured/indicated only within a large channel unit. For example, one 20MHz channel may be configured/indicated as a primary-like channel within each 80MHz channel, 160MHz channel, or 320MHz channel. In this case, the channel unit to which the STA is allocated by the SST may only be an 80MHz channel, a 160MHz channel, or a 320MHz channel.

In the existing wireless LAN system, SST operation is defined only within 160MHz bandwidth. Additionally, in the case of the existing SST operation, there is no channel through which STAs assigned to the secondary channel may transmit and receive control/management frames. In contrast, the proposed method in the present disclosure may set/instruct SST operation by considering 320MHz bandwidth and wide bandwidth (e.g., 480MHz/640MHz bandwidth), and has a new feature of configuring/indicating a primary-like channel through which STAs assigned to the secondary channel may transmit and receive control/management frames. According to the proposed method in the present disclosure, the resolution of the channel for SST operation may be configured, so that the efficiency in channel operation may be increased. Additionally, according to the proposed method in the present disclosure, there is a new effect that STAs assigned to the secondary channel may also transmit and receive control/management frames by considering the SST operation. Additionally, by supporting SST operation considering wide bandwidth according to the proposed method in the present disclosure, a new effect of improved throughput and efficiency may be achieved.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless LAN system, the method comprising:
receiving, from a second STA, a frame including at least one field related to a channel for a subchannel selective transmission (SST) operation; and
performing an SST operation on the channel based on the at least one field,
wherein the at least one field includes a first field including bitmap information related to activation of the channel and a second field indicating a resolution to be applied to the bitmap information, and
wherein the second field is defined to indicate one of a plurality of predefined resolution candidates.

2. The method of claim 1,
wherein the plurality of resolution candidates are defined to include at least two of a 20 MHz resolution, a 40 MHz resolution, or an 80 MHz resolution.

3. The method of claim 2,
wherein, based on a maximum bandwidth associated with the SST operation being 320 MHz bandwidth, the second field is configured with 1 bit, and
wherein a first value according to the 1 bit is defined to indicate a 20 MHz resolution, and a second value according to the 1 bit is defined to indicate a 40 MHz resolution.

4. The method of claim 2,
wherein, based on a maximum bandwidth associated with the SST operation being 480 MHz bandwidth or 640 MHz bandwidth, the second field is configured with 2 bits, and
wherein a first value according to the 2 bits is defined to indicate a 20 MHz resolution, a second value according to the 2 bits is defined to indicate a 40 MHz resolution, a third value according to the 2 bits is defined to indicate a 80 MHz resolution, and a fourth value according to the 2 bits is defined as a reserved value.

5. The method of claim 1,
wherein a number of bits of the first field is variably set based on a size of a maximum bandwidth associated with the SST operation.

6. The method of claim 1,
wherein the performing the SST operation comprises performing transmission and reception of a control frame or a management frame in a specific 20MHz channel within a secondary channel to which the first STA is assigned.

7. The method of claim 6,
wherein the specific 20MHz channel corresponds to a 20MHz channel within the secondary channel located at a point corresponding to a location of a primary 20MHz channel of a basic service set (BSS) to which the first STA belongs.

8. The method of claim 7,
wherein a location of the primary 20 MHz channel, a location of a primary channel including the primary 20 MHz channel, and a location of the secondary channel are identified through a beacon received by the first STA.

9. The method of claim 7,
wherein, based on the 20MHz channel being punctured, the specific 20MHz channel corresponds to a 20MHz channel within the secondary channel located at a point corresponding to a location of a secondary 20MHz channel of the BSS to which the first STA belongs.

10. The method of claim 9,
wherein, based on a 20MHz channel within the secondary channel being punctured, the specific 20MHz channel is configured to one of two 20MHz channels corresponding to a location of a secondary 40MHz channel according to a predefined rule.

11. The method of claim 10,
wherein the two 20 MHz channels include:
a first 20 MHz channel corresponding to a location of a primary 20 MHz channel within a primary 40 MHz channel; and
a second 20 MHz channel corresponding to a location of a secondary 20 MHz channel within a primary 40 MHz channel.

12. The method of claim 10,
wherein, based on the two 20MHz channels being puntured, the specific 20MHz channel is configured to one of four 20MHz channels corresponding to a location of a secondary 80MHz channel according to a predefined rule.

13. The method of claim 12,
wherein the four 20 MHz channels include:
a first 20 MHz channel corresponding to a location of a primary 20 MHz channel within a primary 80 MHz channel;
a second 20 MHz channel corresponding to a location of a secondary 20 MHz channel within a primary 80 MHz channel;
a third 20 MHz channel corresponding to a location of a primary 20 MHz channel within a primary 40 MHz channel among two 20 MHz channels corresponding to a location of a secondary 40 MHz channel within a primary 80 MHz channel; and
a fourth 20 MHz channel corresponding to a location of a secondary 20 MHz channel within a primary 40 MHz channel among two 20 MHz channels corresponding to a location of a secondary 40 MHz channel within a primary 80 MHz channel.

14. The method of claim 12,
wherein, based on the four 20MHz channels being punctured, the specific 20MHz channel is configured to one of the eight 20MHz channels corresponding to a location of a secondary 160MHz channel according to a predefined rule.

15. The method of claim 14,
wherein the eight 20 MHz channels include:
a first 20MHz channel corresponding to a location of a primary 20MHz channel within a primary 160MHz channel;
a second 20MHz channel corresponding to a location of a secondary 20MHz channel within a primary 160MHz channel;
a third 20MHz channel corresponding to a location of a primary 20MHz channel within a primary 40MHz channel among two 20MHz channels corresponding to a location of a secondary 40MHz channel within a primary 160MHz channel;
a fourth 20MHz channel corresponding to a location of a secondary 20MHz channel within a primary 40MHz channel among two 20MHz channels corresponding to a location of a secondary 40MHz channel within a primary 160MHz channel;
a fifth 20 MHz channel corresponding to a location of a primary 20 MHz channel within a primary 80 MHz channel among four 20 MHz channels corresponding to a location of a secondary 80 MHz channel within a primary 160 MHz channel;
a sixth 20 MHz channel corresponding to a location of a secondary 20 MHz channel within a primary 80 MHz channel among four 20 MHz channels corresponding to a location of a secondary 80 MHz channel within a primary 160 MHz channel;
a seventh 20 MHz channel corresponding to a location of a primary 20 MHz channel within a primary 40 MHz channel, among two 20 MHz channels corresponding to a location of a secondary 40 MHz channel within a primary 80 MHz channel, among four 20 MHz channels corresponding to a location of a secondary 80 MHz channel within a primary 160 MHz channel; and
an eighth 20 MHz channel corresponding to a location of a secondary 20 MHz channel within a primary 40 MHz channel, among two 20 MHz channels corresponding to a location of a secondary 40 MHz channel within a primary 80 MHz channel, among four 20 MHz channels corresponding to a location of a secondary 80 MHz channel within a primary 160 MHz channel.

16. The method of claim 6,
wherein the specific 20MHz channel is configured within a secondary channel of a channel unit greater than or equal to 80MHz.

17. The method of claim 6,
wherein the at least one field inlcudes a third field indicating a specific 20MHz channel within a secondary channel to which the first STA is assigned.

18. An apparatus for a first station (STA) in a wireless local area network (WLAN) system, the apparatus comprising:
at least one transceiver; and
at least one processor connected to the at least one transceiver,
wherein the at least one processor is configured to:
receive, from a second STA, a frame including at least one field related to a channel for a subchannel selective transmission (SST) operation; and
perform an SST operation on the channel based on the at least one field,
wherein the at least one field includes a first field including bitmap information related to activation of the channel and a second field indicating a resolution to be applied to the bitmap information, and
wherein the second field is defined to indicate one of a plurality of predefined resolution candidates.

19. A method performed by a second station (STA) in a wireless LAN system, the method comprising:
constructing a frame including at least one field related to a channel for a subchannel selective transmission (SST) operation; and
transmitting the frame including the at least one field to a first STA,
wherein the at least one field includes a first field including bitmap information related to activation of the channel and a second field indicating a resolution to be applied to the bitmap information, and
wherein the second field is defined to indicate one of a plurality of predefined resolution candidates.

20. An apparatus for a second station (STA) in a wireless local area network (WLAN) system, the apparatus comprising:
at least one transceiver; and
at least one processor connected to the at least one transceiver,
wherein the at least one processor is configured to:
construct a frame including at least one field related to a channel for a subchannel selective transmission (SST) operation; and
transmit the frame including the at least one field to a first STA,
wherein the at least one field includes a first field including bitmap information related to activation of the channel and a second field indicating a resolution to be applied to the bitmap information, and
wherein the second field is defined to indicate one of a plurality of predefined resolution candidates.

21. A processing unit configured to control a station (STA) in a wireless local area network (WLAN) system, the processing unit comprising:
at least one processor; and
at least one computer memory operably connected to the at least one processor, and based on being executed by the at least one processor, storing instructions for performing a method according to any one claim of claims 1 to 17.

22. At least one non-transitory computer-readable medium storing at least one instruction, wherein:
the at least one instruction controls a device to perform a method according to any one claim of claims 1 to 17 in a wireless local area network (WLAN) system by being executed by at least one processor.
